# EUROPÄISCHE PATENTANMELDUNG

(11) **EP 2 860 853 A1**
(43) Veröffentlichungstag der Anmeldung: **15.04.2015**
(21) Anmeldenummer: 13188496.7
(22) Anmeldetag: 14.10.2013
(51) Int. Cl.: H02K 9/06, H02K 9/08

(54) **Gebläseleitelement für elektrische Maschine**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die vorliegende Erfindung bezieht sich auf eine elektrische Maschine (1) mit einem Stator (2) und einem auf einer Drehachse (5) angeordneten Rotor (4) sowie ein erstes Gebläse (8a), das sich auf einem Abschnitt der Drehachse in radialer Richtung erstreckt, und im Betrieb einen Kühlmittelstrom in die elektrische Maschine (1) fördert. Die elektrische Maschine (1) umfasst weiter ein Gebläseleitelement (10), das mit dem ersten Gebläse (8) zusammenwirkt und mindestens einen Anteil des Kühlmittelstroms umlenkt. Erfindungsgemäß lässt sich durch das Gebläseleitelement (10), das insbesondere verstellbar sein kann, eine variable, und bedarfsangepasste Kühlung der elektrischen Maschine (1) erreichen.

## Beschreibung

Die Erfindung betrifft eine elektrische Maschine mit einem Stator und einem auf einer Drehachse angeordneten Rotor mit mindestens einem ersten Gebläse, das im Betrieb einen Kühlmittelstrom in die elektrische Maschine fördert und ein Gebläseleitelement, mit dem zumindest ein Anteil des Kühlmittelstroms umgelenkt wird.

Bekanntermaßen entstehen in elektrischen Maschinen, wie zum Beispiel Generatoren, Verluste in Form von Wärme bei der Umwandlung von mechanischer in elektrische Energie und umgekehrt. Daher ist es erforderlich, aktive Bauteile, also jene, in denen Verluste entstehen, möglichst effizient zu kühlen. Eine maximal zulässige Grenzwerttemperatur ergibt sich aus den Isolierstoffklassen, welche stromführende Bauteile untereinander und gegen das Gehäuse elektrisch isolieren. Im laufenden Betrieb muss sichergestellt sein, dass diese Grenzwerttemperaturen nicht überschritten werden, da ansonsten die erforderliche Isolierung nicht mehr gegeben ist.

Darüber hinaus ist durch die entstehende Erwärmung der elektrischen Maschine die maximale Leistung, mit der die elektrische Maschine betrieben werden kann, begrenzt. Es besteht also ein Interesse daran, die elektrische Maschine möglichst effizient zu kühlen.

Zur Kühlung werden in elektrischen Maschinen meist Kühlkreisläufe eingesetzt, die durch einen thermodynamischen Kreisprozess Wärme aus dem Inneren des Generators abführen und typischerweise über einen Wärmetauscher an ein zweites Medium abgeben.

Durch eine geeignete Wahl der Geometrie innerhalb der elektrischen Maschine ergibt sich ein Strömungsnetzwerk innerhalb der elektrischen Maschine, durch welches zu kühlende Bauelemente mit Kühlmittel versorgt werden. Das Strömungsnetzwerk legt mit seiner Geometrie ein Verhältnis von Kühlmittelmassenströmen fest, in dem einzelne der aktiven Bauteile, zum Beispiel Rotor, Stator, Blechpaketendzonen, der Ständerwicklungsbereich und/oder Bleckpaket und Laschen am Statorwicklungskopf gekühlt werden. Für eine gegebene elektrische Maschine ist die Geometrie des Strömungsnetzwerks und damit das Verhältnis der Kühlmittelmassenströme zueinander festgelegt, woraus sich ein ebenfalls festgelegtes Kühlungsverhältnis ergibt. Für elektrische Maschinen im Stand der Technik ist es typischerweise nicht möglich, dieses Verhältnis der Kühlmittelmassenströme zueinander aktiv zu beeinflussen. Daher kann insbesondere keine Anpassung der Kühlung an verschiedene Betriebszustände der elektrischen Maschine erfolgen.

Die Aufgabe der Erfindung ist es, diese Nachteile im Stand der Technik zu überwinden, wodurch die Kühlung einzelner Bauteile der elektrischen Maschine an unterschiedliche Betriebszustände angepasst werden kann und außerdem aufgrund der dadurch effizienteren Kühlung eine höhere Wärmeentwicklung kompensiert werden kann, wie sie mit erhöhter Leistung der elektrischen Maschine einhergeht. So kann ein Überschreiten der zulässigen Grenzwerttemperaturen vermieden werden. Darüber hinaus erhöht sich für die erfindungsgemäße elektrische Maschine deren Lebensdauer, da eine zusätzliche Beanspruchung durch zu hohe Temperaturen vermieden wird. Die erfindungsgemäße elektrische Maschine umfasst einen Stator, einen Rotor, ein erstes Gebläse und ein Gebläseleitelement. Der Rotor ist auf einer Drehachse angeordnet. Das erste Gebläse erstreckt sich auf einem Abschnitt der Drehachse in radialer Richtung und fördert im Betrieb einen Kühlmittelstrom in die elektrische Maschine.

Der Zustand "im Betrieb" soll dabei dahingehend verstanden werden, dass die Drehachse sich um ihre Längsache dreht. Diese Drehung kann durch ein Antreiben, etwa durch eine Turbine oder einen Brennstoffmotor erfolgen, wodurch eine entsprechende Drehbewegung auf die Drehachse der elektrischen Maschine aufgeprägt wird. Daneben sind unter dem Betriff "im Betrieb" auch solche Zustände der elektrischen Maschine zu verstehen, bei denen sich die Drehachse um ihre Längsachse dreht, ohne dass die Drehachse mit einer weiteren Drehbewegung, etwa von dem Motor und/oder einer Turbine, beaufschlagt wird. Man könnte diese Form des Betriebs auch als einen Leerlaufbetrieb bezeichnen, in dem die elektrische Maschine auskühlt und/oder die mechanische Verbindung der Achse zu dem Verbrennungsmotor und/oder der Turbine als Antriebsaggregat, unterbrochen ist, etwa durch Lösen einer entsprechenden Kupplung. Daneben fallen unter den Begriff "im Betrieb" auch solche Zustände, in welchen die elektrische Maschine nur einen Bruchteil ihrer maximal möglichen Leistung erbringt. Ebenso gilt eine Volle Auslastung der Leistung der elektrischen Maschine als "im Betrieb" der elektrischen Maschine.

Das Gebläseleitelement wirkt mit dem Gebläse zusammen und lenkt mindestens einen Anteil des von dem Gebläse in die elektrische Maschine geförderten Kühlmittelstroms um. Die erfindungsgemäße elektrische Maschine hat den Vorteil, dass durch den mindestens einen umgelenkten Anteil des Kühlmittelstroms die Kühlung einzelner Bestandteile der elektrischen Maschine gezielt gesteuert werden kann, und somit an die unterschiedlichen Betriebszustände der elektrischen Maschine angepasst werden kann. Dadurch wird die maximal zulässige Leistungsaufnahme der elektrischen Maschine erhöht, ebenso wie deren Lebensdauer, da ein Verschleiß aufgrund der erfindungsgemäß effizienteren Kühlung reduziert ist.

Bevorzugt ist das Gebläseleitelement so ausgeführt, dass es Blätter des ersten Gebläses in radialer Richtung zumindest mit einem Abschnitt hinterkragt. Der Begriff "hinterkragen" ist so zu verstehen, dass das Gebläseleitelement in den Querschnitt des Gebläses eingreift. Der Querschnitt des Gebläses beschreibt eine Fläche, durch welche das Gebläse Kühlmittel fördern kann. Bei Blick auf das Gebläse vom Inneren der Maschine ragt das Gebläseleitelement in den Querschnitt des Gebläses hinein; und zwar an einer Position entlang der Rotationsachse des Gebläses, die hinter dem Gebläse, bevorzugt im Inneren der elektrischen Maschine liegt.

Durch diese Ausführungsform des Gebläseleitelements lassen sich auch bestehende elektrische Maschinen einfach um die erfindungsgemäße Kühlfunktionalität erweitern.

Weiter bevorzugt ist das Gebläseelement als ein Gebläseleitring ausgeführt, der die Blätter des ersten Gebläses zumindest mit einem Abschnitt in radialer Richtung hinterkragt. Diese Ausführungsform hat den Vorteil, dass für gezielte azimuthale Positionen ein gewünschter Anteil des Kühlmittelstroms zu aktiven Bauteilen, die sich nahe dieser azimuthalen Positionen befinden, umgelenkt werden kann. Daraus ergibt sich ein zusätzlicher Freiheitsgrad in der Umlenkung des mindestens einen Anteils des Kühlmittelstroms.

Bevorzugt umfasst die erfindungsgemäße elektrische Maschine ein Gebläseleitelement, das verstellbar ist. So wird der mindestens eine Anteil des Kühlmittelstroms variierbar. Dies ist von Vorteil, um den jeweils umgelenkten Anteil des Kühlmittelstroms (also den umgelenkten Kühlmittelanteil) an verschiedene Betriebszustände der elektrischen Maschine anzupassen.

Weiter wird durch den variierbaren mindestens einen Anteil des Kühlmittelstroms ein Verhältnis in dem aktive Bauteile der elektrischen Maschine kühlbar sind, veränderbar. Das heißt, es kann gezielt das Verhältnis, indem zum Beispiel Stator und/oder Rotor kühlbar sind, veränderbar sein, aufgrund des mindestens einen Anteils des Kühlmittelstroms.

Bevorzugt umfasst die elektrische Maschine ein Gebläseleitelement, das wenigstens einen Führungskanal umfasst, um den mindestens einen Anteil des Kühlmittelstroms umzulenken.

Vorzugsweise umfasst die elektrische Maschine mindestens eine Ständerwicklung des Stators.

Vorzugsweise ist für die elektrische Maschine der mindestens eine variierbare Anteil des Kühlmittelstroms an einen Betriebszustand der elektrischen Maschine anpassbar. Dadurch ist es möglich, gezielt eine effizientere Kühlung von aktiven Bauteilen der elektrischen Maschine zu erreichen. Damit erhöht sich die maximal mögliche Leistung der elektrischen Maschine ebenso wie deren Lebensdauer, da Verschleiß aufgrund der zu hohen Betriebstemperatur reduziert wird.

Bevorzugt umfasst die elektrische Maschine als erstes Gebläse ein einstufiges Gebläse. Dadurch wird die Bereitstellung des Gebläses kostengünstig möglich.

Vorzugsweise umfasst die elektrische Maschine ein zweites Gebläse, das sich auf einem Abschnitt der Drehachse in radialer Richtung erstreckt und im Betrieb einen zweiten Kühlmittelstrom in die elektrische Maschine fördert, wobei ein zweites Gebläseleitelement mit dem zweiten Gebläse zusammenwirkt und zumindest einen Anteil des zweiten Kühlmittelstroms umlenkt.

Vorzugsweise hinterkragt das zweite Gebläseleitelement der elektrischen Maschine die Blätter des zweiten Gebläses in radialer Richtung zumindest mit einem Abschnitt.

Weiter bevorzugt umfasst die elektrische Maschine das zweite Gebläseleitelement, wobei das zweite Gebläseleitelement als ein Gebläseleitring ausgeführt ist, der die Blätter des zweiten Gebläses zumindest mit einem Abschnitt in radialer Richtung hinterkragt.

Weiter bevorzugt ist das zweite Gebläseleitelement verstellbar, so dass der zumindest eine Anteil des zweiten Kühlmittelstroms variierbar ist.

Für die im Zusammenhang mit dem zweiten Gebläse und/oder dem zweiten Gebläseleitelement erläuterten Ausführungsformen ergeben sich in entsprechender Weise die bereits im Zusammenhang mit dem ersten Gebläse und dem ersten Gebläseleitelement erläuterten Vorteile. Zusätzlich zu diesen wird durch das zweite Gebläse in Verbindung mit dem zweiten Gebläseleitelement der Massestrom von in die elektrische Maschine gefördertem Kühlmittel erhöht, wodurch sich die Kühlleistung, insbesondere bezüglich aktiver Bauteile, weiter erhöht. Weiter bevorzugt ist die elektrische Maschine ein Generator und/oder ein Elektromotor.

Weiter bevorzugt wird als Kühlmittel der erfindungsgemäßen elektrischen Maschine ein gasförmiges Kühlmittel verwendet. In Betracht kommt als gasförmiges Kühlmittel insbesondere Luft, gereinigte Luft oder Wasserstoff. Der Fachmann wird unmittelbar verstehen, dass im Falle der Verwendung von Wasserstoff zusätzliche Schutzmaßnahmen erforderlich sind, die jedoch für das Verständnis der Erfindung hier nicht weiter erläutert werden müssen.

Ebenso ist es ohne Einschränkung denkbar, dass als Kühlmittel eine Flüssigkeit, zum Beispiel Wasser und/oder Generatorenöl verwendet wird. Das flüssige Kühlmittel kann entweder frei in der elektrischen Maschine strömen oder in dafür vorgesehenen Netzwerken zirkulieren.

Die oben beschriebenen Eigenschaften, Merkmale und Vorteile der vorliegenden Erfindung sowie die Art und Weise wie diese erreicht werden, werden klarer und deutlicher verständlich im Zusammenhang mit der folgenden Beschreibung der Ausführungsbeispiele, die im Zusammenhang mit der beigefügten Zeichnung näher erläutert werden, wobei

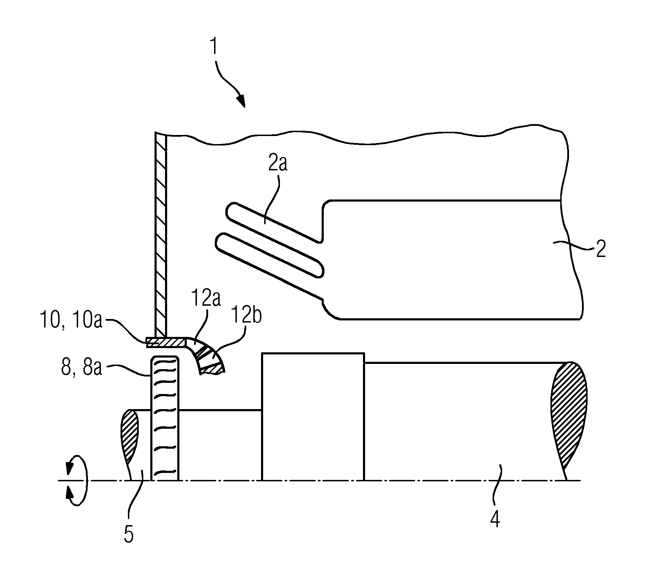

Figur 1 einen Querschnitt durch einen Abschnitt einer elektrischen Maschine 1 zeigt.

### Detaillierte Beschreibung der Erfindung

Wie aus Figur 1 ersichtlich, umfasst die erfindungsgemäße elektrische Maschine 1 eine Drehachse 5, um die ein Rotor 4 in bekannter Weise angeordnet ist, so dass er sich mit Drehung der Drehachse 5 ebenfalls um die Drehachse 5, wie durch den Doppelpfeil angedeutet, dreht. Ebenso umfasst die elektrische Maschine 1 einen Stator 2, der im Gegensatz zum rotierenden Rotor ortsfest in der elektrischen Maschine 1 angebracht ist. Dem Fachmann ist bekannt, dass Rotor 4 und/oder Stator 2 vorzugsweise aus gegeneinander isolierten Blechen aufgebaut sein können. Die elektrische Maschine 1 gemäß der vorliegenden Erfindung umfasst außerdem, ein Gebläse 8, 8a, das auf der Drehachse 5 angeordnet ist, und dessen Blätter sich in radialer Richtung erstrecken. Das Gebläse 8, 8a fördert im Betrieb, also bei Drehung der Drehachse 5, ein Kühlmittel in das Innere der elektrischen Maschine 1.

Der Fachmann wird verstehen, dass die Darstellung in Figur 1 nur einen Ausschnitt der elektrischen Maschine 1 zeigt. So ist die Drehachse 5 nur mit einem ihrer Endabschnitte (in der Figur links gezeigt) dargestellt, während der zweite Endabschnitt der Drehachse und der weitere Aufbau sich dazu im Wesentlichen spiegelbildlich ergeben, was durch die rechte Abbruchlinie angedeutet ist. Die horizontale obere Abbruchlinie soll andeuten, dass die elektrische Maschine 1 noch weitere Bestandteile umfassen kann, die jedoch für das Verständnis der Erfindung nicht erforderlich sind.

Der Fachmann wird daher auch verstehen, dass das in Figur 1 gezeigte Gebläse 8, 8a stellvertretend für ein erstes Gebläses 8 und ein zweites Gebläse 8a steht, das sich am anderen Endabschnitt der Drehachse 5 befinden würde. Das zweite Gebläse 8a ist optional.

Die elektrische Maschine 1 der vorliegenden Erfindung umfasst ein Gebläseleitelement 10, das mit dem ersten Gebläse 8 zusammenwirkt. Wie gezeigt hintergreift bzw. hinterkragt das Gebläseleitelement 10 das erste Gebläse 8 stromabwärts von dem ersten Gebläse 8, wodurch das erste Gebläse 8 einen Kühlmittelstrom bzw. Kühlmittelmassenstrom von außerhalb der elektrischen Maschine 1 ins Innere fördert.

Das Gebläseleitelement 10, 10a kann wenigstens einen Führungskanal 12a, 12b umfassen, um mindestens einen Anteil des Kühlmittelstroms umzulenken. In der in Fig. 1 gezeigten Darstellung dient ein erster Führungskanal 12a dazu, einen ersten Anteil des Kühlmittelstroms und ein zweiter Führungskanal 12b dazu, einen zweiten Anteil des Kühlmittelstroms umzulenken. Ohne Einschränkung könnte das Gebläseleitelement 10 auch mehr als einen oder zwei der Führungskanäle 12a, 12b umfassen. Darüber hinaus ist das in Fig. 1 gezeigte Führungselement 10, 10a nur in einer Schnittdarstellung gezeigt, es kann sich jedoch ohne Einschränkung um ein als Gebläseleitring ausgeführtes Gebläseleitelement 10 handeln, wodurch sich an gewünschten azimuthalen Positionen geeignete Anteile aus dem Kühlmittelstrom (nicht gezeigt) umlenken lassen, um gezielt einzelne, insbesondere aktive Bauelemente der elektrischen Maschine 1 zu kühlen. Der Fachmann wird verstehen, dass durch die Anordnung der Gebläseleitelemente 8, 8a an unterschiedlichen azimuthalen Positionen eine gezielte Kühlung von aktiven Komponenten der elektrischen Maschine 1 möglich wird.

Weiter sieht die Erfindung vor, die Gebläseleitelemente 10, 10a als verstellbare Gebläseleitelemente 10, 10a auszuführen, wodurch der durch das verstellbare Gebläseleitelement umlenkbare Anteil des Kühlmittelstroms an einen Betriebszustand der elektrischen Maschine 1 anpassbar ist. So wird es möglich, den Kühlmittelstrom für ein gewünschtes Bauteil, zum Beispiel die Ständerkopfwicklung 2a zu erhöhen, indem zum Beispiel die Grenze zwischen dem ersten Führungskanal 12a und zweiten Führungskanal 12b so verschoben wird, dass der zweite Führungskanal 12b (in Figur 1 der untere) verkleinert wird, wohingegen sich der obere erste Führungskanal 12a vergrößert. Das heißt, es wird in dieser Einstellung ein größerer Anteil des Kühlmittelstroms zu den Ständerkopfwicklungen 2a geleitet, so dass diese schneller abkühlen können. Der Fachmann wird weiter verstehen, dass am zweiten Endabschnitt der Drehachse 5 ein zweites Gebläse 8a und ein zweites Gebläseleitelement 10a angebracht sein können, die wiederum mit einem oder mehreren Führungskanälen 12a, 12b ausgestattet sind. Insofern sind die Darstellungen in Figur 1 bezüglich des Gebläses 8, und des Führungselements 10 auch stellvertretend für ein zweites Gebläse 8a und ein zweites Führungselement 10a, das an einem zweiten Abschnitt der Drehchse 5 angebracht sein kann und einen zweiten Kühlmittelstrom (nicht gezeigt) in entsprechender Weise ins Innere der elektrischen Maschine 1 fördert.

Der Fachmann wird weiter verstehen, dass durch die veränderbaren Anteile des Kühlmittelstroms die durch das jeweilige Gebläseleitelement 10, 10a umgeleitet werden, die umgelenkten Anteile des Kühlmittelstroms gezielt an einen Betriebszustand der elektrischen Maschine anpassbar sind. So kann es zum Beispiel von Interesse sein, während der Leistungsaufnahme des elektrischen Geräts 1 vor allem den Rotor 2 und/oder den Stator 4 zu kühlen, während beim Auslaufen der elektrischen Maschine 1, wenn also keine Leistung mehr auf die Drehachse 5 antriebsseitig übertragen wird, eine Kühlung der Ständerwicklungen 2a unterstützt werden kann, indem die jeweils umgelenkten Anteile des Kühlmittelstroms verstärkt auf die Ständerwicklung 2a gerichtet werden. Darüberhinaus sind selbstverständlich auch Anpassungen des umgelenkten Kühlmittelstroms an verschiedene Lastpunkte der elektrischen Maschine möglich, das heißt Betriebszustände, bei denen die elektrische Maschine bei unterschiedlichen Anteilen der maximal möglichen Last betrieben wird.

Der Fachmann wird außerdem verstehen, dass das erfindungsgemäße Gebläseleitelement sowohl im Zusammenhang mit gasförmigen als auch mit flüssigen Kühlmitteln verwendbar ist. Im Falle von gasförmigen Kühlmitteln kommen zum Beispiel Luft, gereinigte Luft und/oder Wasserstoff in Betracht. Wasserstoff ist insofern vorteilhaft, als dessen Wärmekapazität und damit dessen Fähigkeit, eine effektive Kühlung zu bewirken, erhöht ist. Dem Fachmann ist jedoch bekannt, dass die Verwendung von Wasserstoff als Kühlmittel weitere Sicherheitsvorkehrungen erfordert, um insbesondere eine Knallgasexplosion zu vermeiden.

Prinzipiell ist ebenso denkbar, dass der erfindungsgemäß vorgeschlagene Gebläseleitring bzw. das Gebläseleitelement 10, 10a im Zusammenhang mit flüssigen Kühlmitteln, wie zum Beispiel Wasser und/oder Generatorenöl verwendet werden kann. Im Zusammenhang mit Wasser kann es von Vorteil sein, spezielle Leitungen dafür vorzusehen, um Kurzschlüsse innerhalb der elektrischen Maschine zu vermeiden. Diese Maßnahmen sind dem Fachmann jedoch bekannt, so dass hier auf die Dimensionierung eines entsprechenden Leitungssystems nicht eingegangen werden muss. Im Zusammenhang mit Generatorenöl als flüssigem Kühlmittel können sich die Anforderungen bezüglich besonderer Kühlmittelleitungen lockern, falls das Generatorenöl selbst nicht elektrisch leitfähig ist.

Das in Figur 1 gezeigte Gebläse 8, 8a ist als einstufiges Gebläse gezeigt.

Dies ist von Vorteil, da der Druck des strömenden Kühlmittels stromabwärts von dem Gebläse 8, 8a nicht reduziert wird, wie es zum Beispiel bei einem mehrstufigen Gebläse der Fall wäre. Ohne Einschränkung ist es jedoch denkbar, das erfindungsgemäße Gebläseleitelement 10, 10a auch in Verbindung mit einem mehrstufigen Gebläse zu verwenden.

Für den Fachmann ist weiterhin ersichtlich, dass die im Zusammenhang mit dem ersten Gebläse 8 und dem ersten Gebläseleitelement 10 angeführten Ausführungsformen und Vorteile auch für das zweite Gebläse 8a und ein entsprechendes zweites Gebläseleitelement 10a gelten, die sich an einem zweiten, typischerweise dem zweiten Endabschnitt der Drehachse 5 befinden.

Das Gebläseleitelement 10, 10a wurde im Zusammenhang mit einem ersten und zweiten Gebläseleitelement beschrieben. Ohne Einschränkungen können jedoch auch mehr als zwei Gebläseleitelemente verwendet werden, die entweder als Einzelteile oder als Bestandteile eines Gebläseleitrings, der die mehreren Gebläseleitelemente 10, 10a umfasst, ausgebildet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine (1) umfassend:
- einen Stator (2),
- einen auf einer Drehasche (5) angeordneten Rotor (4), und
- ein erstes Gebläse (8), das sich auf einem Abschnitt der Drehachse (5) in radialer Richtung erstreckt und im Betrieb einen Kühlmittelstrom in die elektrische Maschine (1) fördert,
wobei ein Gebläseleitelement (10), mit dem ersten Gebläse (8) zusammenwirkt und zumindest einen Anteil des Kühlmittelstroms umlenkt.

2. Elektrische Maschine (1) gemäß Anspruch 1,
wobei das Gebläseleitelement (10) Blätter des ersten Gebläses (8) in radialer Richtung zumindest mit einem Abschnitt hinterkragt.

3. Elektrische Maschine (1) gemäß Anspruch 1 oder 2,
wobei das Gebläseleitelement (10) als ein Gebläseleitring ausgeführt ist, der die Blätter des Gebläses zumindest mit einem Abschnitt in radialer Richtung hinterkragt.

4. Elektrische Maschine (1) gemäß einem der vorangehenden Ansprüche,
wobei das Gebläseleitelement (10) verstellbar ist, so dass der mindestens eine Anteil des Kühlmittelstroms variierbar ist.

5. Elektrische Maschine (1) gemäß einem der vorangehenden Ansprüche,
wobei das Gebläseleitelement (10) wenigstens einen Führungskanal (12a, 12b) umfasst, um den mindestens einen Anteil des Kühlmittelstroms umzulenken.

6. Elektrische Maschine (1) gemäß einem der vorhergehenden Ansprüche,
wobei der Stator (2) mindestens eine Ständerwicklung (2a) umfasst.

7. Elektrische Maschine (1) gemäß einem der Ansprüche 4 bis 6,
wobei der mindestens eine variierbare Anteil des Kühlmittelstroms an einen Betriebszustand der elektrischen Maschine (1) anpassbar ist.

8. Elektrische Maschine (1) gemäß einem der vorhergehenden Ansprüche,
wobei das erste Gebläse (8) ein einstufiges Gebläse ist.

9. Elektrische Maschine (1) gemäß einem der vorhergehenden Ansprüche, weiter umfassend:
- ein zweites Gebläse (8a), das sich auf einem Abschnitt der Drehachse (5) in radialer Richtung erstreckt, und im Betrieb einen zweiten Kühlmittelstrom in die elektrische Maschine (1) fördert, wobei ein zweites Gebläseleitelement (10a) mit dem zweiten Gebläse (8a) zusammenwirkt und mindestens einen Anteil des zweiten Kühlmittelstroms umlenkt.

10. Elektrische Maschine (1) gemäß Anspruch 9,
wobei das zweite Gebläseleitelement (10a) Blätter des zweiten Gebläses (8a) in radialer Richtung zumindest mit einem Abschnitt hinterkragt.

11. Elektrische Maschine (1) gemäß Anspruch 9 oder 10,
wobei das zweite Gebläseleitelement (10a) als ein Gebläseleitring ausgebildet ist, der die Blätter des zweiten Gebläses (8a) zumindest mit einem Abschnitt in radialer Richtung hinterkragt.

12. Die elektrische Maschine (1) gemäß einem der Ansprüche 9 bis 11,
wobei das zweite Gebläseleitelement (10a) verstellbar ist, so dass der mindestens eine Anteil des zweiten Kühlmittelstroms variierbar ist.

13. Elektrische Maschine (1) gemäß einem der vorhergehenden Ansprüche,
wobei die elektrische Maschine (1) ein Generator oder ein elektrischer Motor, insbesondere ein Drehstrommotor ist.

14. Elektrische Maschine (1) gemäß einem der vorhergehenden Ansprüche,
wobei das Kühlmittel ein gasförmiges Kühlmittel, insbesondere Luft, gereinigte Luft oder Wasserstoff ist.

15. Elektrische Maschine (1) gemäß einem der vorhergehenden Ansprüche,
wobei das Kühlmittel ein flüssiges Kühlmittel, insbesondere Wasser, gereinigtes Wasser oder Generatorenöl ist.
